# FASCICULE DE BREVET EUROPEEN

(11) **EP 1 297 272 B1**
(45) Date de publication et mention de la délivrance du brevet: **26.05.2004**
(21) Numéro de dépôt: 01947584.7
(22) Date de dépôt: 22.06.2001
(51) Int. Cl.: F16H 59/02, B60K 20/06

(54) **COMMANDE SOUS VOLANT DE BOITE DE VITESSES ROBOTISEE**
UNTER DEM LENKRAD ANGEBRACHTE STEUERUNG FÜR AUTOMATISIERTES GETRIEBE
CONTROL UNIT UNDER THE STEERING WHEEL FOR AUTOMATIC GEARBOX

(30) Priorité: 04.07.2000 FR 0008689
(43) Date de publication de la demande: 02.04.2003
(73) Titulaire: Renault s.a.s., 92109 Boulogne Billancourt (FR)
(72) Inventeur: MARZOLF, Dominique, 91470 Boullay les Troux (FR)
(86) Numéro de dépôt international: PCT/FR2001/001973
(87) Numéro de publication internationale: WO 2002/002969

(56) Documents cités:
- DE-A- 4 233 938
- DE-A- 4 305 903
- US-A- 5 520 066
- PATENT ABSTRACTS OF JAPAN vol. 016, no. 051 (M-1209), 10 février 1992 (1992-02-10) -& JP 03 253424 A (MAZDA MOTOR CORP), 12 novembre 1991 (1991-11-12) cité dans la demande

## Description

La présente invention concerne un dispositif pour la commande sous volant des changements de rapports d'une transmission de véhicule automobile.

L'invention concerne plus précisément les changements de rapports d'une transmission comportant une boîte de vitesses mécanique à commande automatisée, aussi appelée boîte de vitesses robotisée. Dans celle-ci, il est nécessaire que le conducteur puisse sélectionner différents modes et positions de fonctionnement de la boîte, tels que par exemple une position de parcage (P), une position de marche arrière (R), une position neutre (N), une position dite automatique ou automatisée (D) dans lequel la transmission provoque automatiquement les changements de rapports de marche avant en fonction de différents paramètres de programmation, de fonctionnement et de roulage du véhicule, et un mode dit manuel (M) dans lequel le conducteur agit sur un organe de passage de rapports de marche avant qui transmet. des impulsions électriques à la transmission du véhicule pour provoquer la montée ou la descente des rapports.

Il est souhaitable de réduite au minimum le nombre d'organes sur lesquels le conducteur doit agir manuellement, et de regrouper ces organes dans une zone accessible, à proximité du volant, et de préférence de manière que les commandes soient aisément accessibles à la main du conducteur qui reste posée sur le volant

Le document japonais JP 3253424 A a fait connaître un dispositif de commande de positions qui peut être manoeuvrée d'un doigt par la main au volant, ce système comportant une ailette pivotante. La Demanderesse a aussi proposé dans la demande de brevet français FR 27 92085 qui sert de base pour la présentation en deux parties de la revendication 1 un dispositif pour la commande au volant des changements de rapports d'une transmission, comportant un levier de commande monté sur une double articulation à une de ses extrémités et portant une tête de manipulation à l'autre, susceptible d'être manoeuvrée pour pivoter parallèlement au plan du volant autour d'un axe de pivotement et pour basculer vers le volant ou en s'en éloignant autour d'un axe de basculement. Le pivotement de la tête sur sa trajectoire circulaire parallèle au plan du volant permet de sélectionner les positions P, R, N, D et le mode M, tandis que le basculement en avant ou en arrière est utilisé pour donner les impulsions de montée ou de descente des rapports. Le fait que la tête de manipulation puisse se déplacer selon deux directions angulaires, par basculement ou par pivotement, l'expose à des risques de confusion ou d'erreur pour peu que le mouvement des doigts ne soit pas orienté de manière très nette dans l'une ou l'autre de ces directions.

Le but de l'invention est de proposer un dispositif alternatif, présentant une bonne compacité et une bonne ergonomie.

L'invention atteint son but grâce à un dispositif pour la commande au volant des changements de rapports d'une transmission d'une boîte de vitesses robotisée, du type comportant d'une part un bras radial de commande portant une palette de manipulation à une extrémité, susceptible d'être manoeuvrée d'un doigt pour basculer en arrière ou en avant autour d'un axe de basculement sensiblement parallèle au plan du volant, de manière à monter ou descendre les rapports de transmission, et d'autre part des moyens manoeuvrables pour la commande des changements de position, caractérisé en ce que le bras radial est fixe et en ce que les moyens pour la commande des changements de position sont constitués par ladite palette montée en rotation sur un axe sensiblement parallèle au bras. Il est ainsi possible de manoeuvrer les changements de position d'une manière très simple et par un mouvement bien différent de celui de la palette qui contrôle les rapports de sorte qu'il n'est pas possible de confondre ces mouvements.

Selon une possibilité, la palette est montée tournante (et basculante) directement à l'extrémité du bras, et selon une autre possibilité, elle est montée basculante sur une portion de bras extrémale elle-même montée tournante sur le reste du bras.

Avantageusement, il est prévu un bouton de passage indépendant de mode manuel/automatique, et celui-ci est par exemple disposé au voisinage de la palette.

La palette est sensiblement égale ou inférieure à la taille d'une paume de main, de manière à faciliter sa préhension lorsque la main est sur le volant, et permettre à un doigt de manoeuvrer les moyens de commande.

La palette est conformée de manière ergonomique, avec un bord arrondi et de préférence orienté obliquement pour être sensiblement parallèle à la jante du volant dans le voisinage de la palette. La forme de la palette est de préférence choisie pour être dans la continuité du bras radial.

Le bras et la palette ont avantageusement une section en forme de goutte d'eau, au moins dans la région de montage tournant de l'un sur l'autre. Une telle forme ou une forme analogue, qui possède une saillie radiale, permet de saisir facilement la palette par ladite saillie pour la pousser ou la tirer d'un doigt, afin de la faire tourner et effectuer la sélection de positions.

Avantageusement, il est prévu une pièce en matériau souple au niveau de la zone de basculement de la palette sur le bras.

L'invention sera mieux comprise et d'autres avantages et caractéristiques seront mis en évidence à la lecture de la description suivante, se référant aux dessins annexés sur lesquels :
- la figure 1 est une vue en perspective de face dé trois-quarts droite du dispositif de commande conforme à l'invention, selon un premier mode de réalisation, la palette non tournée ;
- la figure 2 est une vue analogue à la figure 1, la palette étant en position tournée ;
- la figure 3 est une vue en perspective de face de trois-quarts gauche d'un deuxième mode de réalisation de dispositif conforme à l'invention ;
- la figure 4 est une vue en perspective de face de trois-quarts gauche d'un troisième mode de réalisation de dispositif conforme à l'invention.

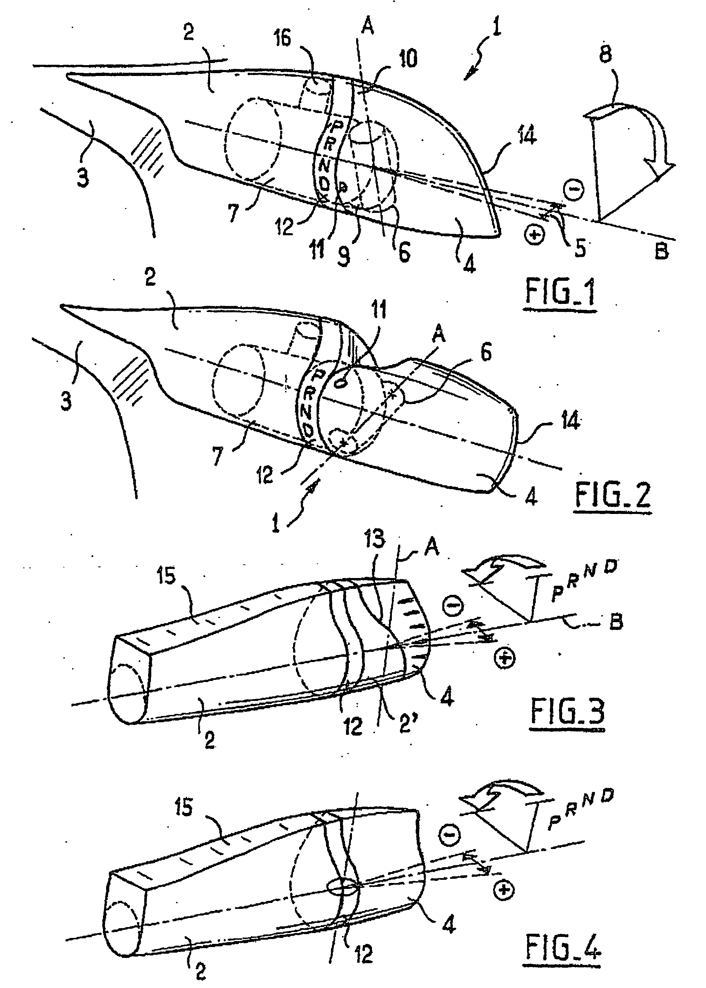

Les figures 1 et 2 montrent le dispositif 1 comportant un bras fixe radial 2 monté sur l'habillage 3 de la colonne de direction du véhicule, de manière à s'étendre latéralement, derrière le volant (non représenté). A l'extrémité du bras 2 est articulée une palette de manipulation 4 susceptible de pivoter autour d'un axe A sensiblement orthogonal à l'axe B du bras. Le pivotement ou basculement en question est limité à une très courte trajectoire angulaire en avant ou en arrière, comme. suggéré par les flèches 5, suffisant pour donner les impulsions de descente ou de montée des rapports. Le mécanisme de basculement est symbolisé par le cylindre 6 en pointillés et se trouve à la limite entre le bras 2 et la palette 4.

Un deuxième mécanisme symbolisé par le cylindre 7 permet de faire tourner la palette 4 autour de l'axe B du bras comme montré par la flèche 8. Cette rotation est utilisée pour la sélection des positions P, R, N et D. La forme du bras 2 et de la palette 4 dans la zone de leur articulation est, comme il apparaît sur le dessin, en section en goutte d'eau, c'est-à-dire avec une partie basse 9 sensiblement cylindrique et une partie supérieure formant une saillie radiale 10. La partie 10 permet de manoeuvrer facilement la palette 4 en rotation. La partie cylindrique 9 permet de réaliser un marquage facile des positions, par exemple au moyen d'un repère 11 qui passe lors de la rotation devant les symboles D, N, R et P inscrits sur le bras ou sur une pièce décorative 12 du bras. La pièce 12, située dans la région du basculement de la palette, peut être réalisée en matériau souple pour masquer le déplacement minime de la palette par rapport au bras. Comme le montre la figure 1, c'est dans la position D que le basculement de la palette 4 est possible et cette position correspond à une position sensiblement verticale de l'axe A (vertical par rapport au plan de la jante du volant, lequel peut être lui-même plus ou moins incliné).

Un bouton 16 de passage de mode automatique/manuel M est prévu de manière à être accessible au doigt, par exemple à l'arrière du bras 2 près de la zone d'articulation de la palette 4.

Le bord extrémal 14 de la palette 4 peut être incliné parallèlement à la tangente à la jante du volant au voisinage de la palette, c'est-à-dire de préférence à l'emplacement idéal de la main du conducteur (en position 10h10), ou avoir une autre forme.

Dans le mode de réalisation de la figure 3, la rotation de la palette 4 est obtenue par le montage en rotation d'une partie extrémale 2' du bras autour de l'axe B, la palette 4 étant articulée en basculement sur ladite partie 2'. La zone d'articulation 13 entre la palette 4 et le bras 2' peut être constituée ou couverte de matériau souple masquant le faible jeu de fonctionnement entre la palette et l'extrémité 2' du bras.

Le mode de réalisation de la figure 4 est semblable dans son fonctionnement à celui des figures 1 et 2, mais reprend l'esthétique du mode de réalisation de la figure 3, à savoir qu'un méplat 15 est prévu sur le haut du bras et de la palette, méplat qui s'enfonce et s'élargit au fur et à mesure qu'on se rapproche de la colonne de direction.

## Revendications

1. Dispositif pour la commande au volant des changements de rapports d'une transmission, du type comportant d'une part un bras radial (2) de commande portant une palette (4) de manipulation à une extrémité, susceptible d'être manoeuvrée d'un doigt pour basculer en arrière ou en avant autour d'un axe de basculement (A) sensiblement parallèle au plan du volant, de manière à monter ou descendre les rapports de transmission, et d'autre part des moyens manoeuvrables pour la commande des changements de position, **caractérisé en ce que** le bras radial (2) est fixe et **en ce que** les moyens pour la commande des changements de position sont constitués par ladite palette (4), montée en rotation sur un axe (B) sensiblement parallèle au bras (2).

2. Dispositif selon la revendication 1, **caractérisé en ce que** la palette (4) est montée tournante à l'extrémité du bras (2).

3. Dispositif selon la revendication 1, **caractérisé en ce que** la palette (4) est montée sur une partie extrémale (2') de bras montée tournante sur le bras (2).

4. Dispositif selon l'une quelconque des revendications précédentes, **caractérisé en ce qu'**il est prévu un bouton (16) de passage de mode manuel/automatique.

5. Dispositif selon l'une quelconque des revendications précédentes, **caractérisé en ce que** la palette (4) est sensiblement dans la continuité du bras (2).

6. Dispositif selon l'une quelconque des revendications précédentes, **caractérisé en ce que** la palette (4) et/ou le bras comportent, au moins au voisinage de la zone de montage tournant, une saillie radiale (10).

7. Dispositif selon la revendication 6, **caractérisé en ce que** la palette (4) et/ou le bras (2) ont, au moins au voisinage de la zone de montage tournant, une section en goutte d'eau.

8. Dispositif selon l'une quelconque des revendications précédentes, **caractérisé en ce qu'**il est prévu une pièce en matériau souple au niveau (12, 13) de l'articulation de basculement de la palette (4).

## Patentansprüche

1. Vorrichtung am Lenkrad zur Steuerung des Wechsels der Gänge eines Getriebes, von dem Typ, der zum einen einen radialen Steuerarm (2) aufweist, der eine Schaufel (4) zur Bedienung an einem Ende hat, die mit einem Finger betätigt werden kann, um sie nach hinten oder nach vorne um eine Kippachse (A) zu kippen, die im wesentlichen parallel zur Ebene des Lenkrads ist, um die Getriebegänge hoch oder herunter zu schalten, und zum anderen bedienbare Steuermittel für den Wechsel der Stellung, **dadurch gekennzeichnet, dass** der radiale Arm (2) feststehend ist und dass die Steuermittel für den Wechsel der Stellung aus der Schaufel (4) bestehen, die drehbar um eine Achse (B) gelagert ist, die zum Arm (2) im wesentlichen parallel ist.

2. Vorrichtung gemäß Anspruch 1, **dadurch gekennzeichnet, dass** die Schaufel (4) drehbar am Ende des Arm (2) gelagert ist.

3. Vorrichtung gemäß Anspruch 1, **dadurch gekennzeichnet, dass** die Schaufel (4) an einem äußeren Armteil (2') befestigt ist, das drehbar am Arm (2) befestigt ist.

4. Vorrichtung gemäß irgend einem der vorhergehenden Ansprüche, **dadurch gekennzeichnet, dass** ein Knopf (16) für den Übergang manueller/automatischer Modus vorgesehen ist.

5. Vorrichtung gemäß irgend einem der vorhergehenden Ansprüche, **dadurch gekennzeichnet, dass** die Schaufel (4) im wesentlichen den Arm (2) fortführt.

6. Vorrichtung gemäß irgend einem der vorhergehenden Ansprüche, **dadurch gekennzeichnet, dass** die Schaufel (4) und/oder der Arm zumindest in der Nähe des Bereichs der drehbaren Befestigung einen radialen Vorsprung (10) haben.

7. Vorrichtung gemäß dem Anspruch 6, **dadurch gekennzeichnet, dass** die Schaufel (4) und/oder der Arm (2) zumindest in der Nähe des Bereichs der drehbaren Befestigung einen wassertropfenförmigen Querschnitt haben.

8. Vorrichtung gemäß irgend einem der vorhergehenden Ansprüche, **dadurch gekennzeichnet, dass** ein Teil aus weichem Material auf der Höhe (12, 13) Kippgelenks der Schaufel (4) vorgesehen ist.

## Claims

1. A device for control at the steering wheel of the gear changes of a transmission, of the type comprising on the one hand a radial control arm (2) carrying at one end an actuating paddle (4) capable of being manoeuvred with one finger to pivot rearwardly or forwardly about a pivot axis (A) substantially parallel to the plane of the steering wheel in such a way as to change up or down through the transmission ratios, and on the other hand means which are manoeuvrable for controlling changes in position **characterised in that** the radial arm (2) is fixed and that the means for controlling the changes in position are formed by said paddle (4) which is mounted rotatably on an axis (B) substantially parallel to the arm (2).

2. A device according to claim 1 **characterised in that** the paddle (4) is mounted rotatably at the end of the arm (2).

3. A device according to claim 1 **characterised in that** the paddle (4) is mounted on an arm end portion (2') mounted rotatably on the arm (2).

4. A device according to any one of the preceding claims **characterised in that** there is provided a manual/automatic mode shift button (16).

5. A device according to any one of the preceding claims **characterised in that** the paddle (4) is disposed substantially in alignment with the arm (2).

6. A device according to any one of the preceding claims **characterised in that** the paddle (4) and/or the arm comprise a radial projection (10) at least in the vicinity of the rotational mounting zone.

7. A device according to claim 6 **characterised in that** the paddle (4) and/or the arm are of a water drop-shaped section at least in the vicinity of the rotational mounting zone.

8. A device according to any one of the preceding claims **characterised in that** there is provided a portion of flexible material at the location (12, 13) of the pivotal mounting of the paddle (4).
